# EUROPÄISCHE PATENTSCHRIFT

(11) **EP 1 547 807 B1**
(45) Veröffentlichungstag und Bekanntmachung des Hinweises auf die Patenterteilung: **05.03.2014**
(21) Anmeldenummer: 04029493.6
(22) Anmeldetag: 13.12.2004
(51) Int. Cl.: G06K 19/06, G03H 1/00, B42D 25/29

(54) **Sicherheitselement mit Beugungsstruktur und Verfahren zur Herstellung dieses Elements**
Security element having a diffraction structure and method of manufacturing said element
Elément de sécurité comprenant une structure de diffraction et procédé de fabrication dudit élément

(30) Priorität: 22.12.2003 DE 10361130
(43) Veröffentlichungstag der Anmeldung: 29.06.2005
(73) Patentinhaber: Giesecke & Devrient GmbH, 81677 München (DE)
(72) Erfinder: Heim, Manfred, Dr., 81543 München (DE)
(74) Vertreter: Zeuner Summerer Stütz

(56) Entgegenhaltungen:
- EP-A1- 0 360 969
- EP-A1- 0 732 667
- WO-A-99/47983
- WO-A2-03/082598
- DE-A1- 10 226 114

## Beschreibung

Die Erfindung betrifft ein Sicherheitselement für Sicherheitspapiere, Wertdokumente und dergleichen mit einer flächigen Beugungsstruktur. Die Erfindung betrifft ferner ein Sicherheitspapier, ein Wertdokument und ein Verfahren zum Herstellen eines solchen Sicherheitselements.

Hologramme, holographische Gitterbilder und andere hologrammähnliche Beugungsstrukturen werden vielfach zur Echtheitsabsicherung von Kreditkarten, Wertdokumenten, Produktverpackungen und dergleichen eingesetzt. Die Druckschrift US-A-4 856 857 beschreibt ein Hologramm vom Transparenttyp, das lediglich unter bestimmten Betrachtungswinkeln erkennbar ist und unter allen anderen Betrachtungswinkeln als transparente Schicht wirkt. Dadurch wird sowohl eine Betrachtung der Beugungsstrukturen in Reflexion als auch eine Betrachtung von unterhalb des Hologramms angebrachten Informationen ermöglicht.

Dazu umfasst das Hologramm eine Schicht mit einem die Beugungsstruktur wiedergebenden Oberflächenrelief, die mit einer weiteren, den holgraphischen Effekt verstärkenden Schicht versehen ist. Diese weitere Schicht kann entweder eine hochbrechende Schicht sein, deren Brechungsindex sich deutlich von dem Brechungsindex der hologrammbildenden Schicht unterscheidet, oder kann eine dünne reflektierende Metallschicht mit einer Dicke unterhalb von 20 nm sein, die einen großen Anteil des einfallenden Lichts transmittiert.

Eine derartige semitransparente Metallschicht darf eine gewisse Mindestdikke nicht unterschreiten, um den holographischen Effekt in Reflexion gut sichtbar zu machen. Mit dieser Mindestmenge an Metall erzeugen derartige Schichten auf einem opaken Untergrund im Auflicht allerdings bereits einen deutlich metallisch wirkenden optischen Eindruck.

Ist die hologrammbildende Schicht andererseits mit einer hochbrechenden Schicht versehen, so bringt sie den Hologrammeffekt sehr brillant und effektiv zum Vorschein, wenn das Holgramm auf eine dunkle, absorbierende Unterlage aufgebracht ist. Ist das Hologramm allerdings auf einer hellen, diffus reflektierenden Unterlage aufgebracht, wie sie die meisten Wertdokumente aufweisen, so erscheinen die holographischen Strukturen nur schwach und sind daher schwer prüfbar.

Die WO 03/082598 offenbart ein Sicherheitselement mit zwei übereinander angeordneten optisch variablen Mikrostrukturen, von denen eine entwender eine entwender eine hochbrechende Schicht oder eine Metallschicht enthält.

Davon ausgehend liegt der Erfindung die Aufgabe zugrunde, ein gattungsgemäßes Sicherheitselement vorzuschlagen, das einen unverändert hohen Fälschungsschutz bietet und dabei die Nachteile des Stands der Technik vermeidet.

Diese Aufgabe wird durch das Sicherheitselement mit den Merkmalen des Hauptanspruchs gelöst. Ein Sicherheitspapier für die Herstellung von Sicherheitsdokumenten, ein Wertdokument mit einem solchen Sicherheitselement sowie ein Herstellungsverfahren für ein solches Sicherheitselement sind Gegenstand der nebengeordneten Ansprüche.

Das erfindungsgemäße Sicherheitselement zeichnet sich dadurch aus, dass die Schicht, in der die flächige Beugungsstruktur vorliegt, mit einer zwei Schichten umfassenden Schichtenfolge kombiniert ist, wobei die Schichtenfolge aus einer semitransparenten Metallschicht und einer hochbrechenden Schicht besteht. Mit der hochbrechenden Schicht werden die Beugungsstrukturen wirkungsvoll zum Vorschein gebracht, mit der semitransparenten Metallschicht wird einerseits der Untergrund abgedunkelt und andererseits die Reflexionswirkung der hochbrechenden Beschichtung noch verstärkt. Die semitransparente Metallschicht hat zudem den Vorteil, dass sie die Haftung der hochbrechenden Schicht auf dem Prägelack verbessert.

Die erfindungsgemäße Kombination zweier unterschiedlicher Schichten in der mit der flächigen Beugungsstruktur kombinierten Schichtenfolge führt somit zu einer deutlich besseren Erkennbarkeit der Beugungsstrukturen auf hellem, diffus reflektierenden Untergrund, wobei wegen der hohen Transmission der Metallschicht der optische Eindruck der Transparenz des Sicherheitselements insgesamt nicht gestört wird. Das erfindungsgemäße Sicherheitselement ist daher besonders gut zur Absicherung von bedruckten Dokumenten geeignet, bei denen der visuelle Eindruck des Dokuments nicht von einem metallisch glänzenden Sicherheitselement dominiert werden soll. Ebenso kann das Sicherheitselement aber auch zur Absicherung beliebiger Waren und/ oder Verpackungen verwendet werden.

In einer bevorzugten Ausgestaltung des erfindungsgemäßen Sicherheitselements ist die semitransparente Metallschicht durch eine durchgehende dünne Metallschicht gebildet. Die Dicke der durchgehenden Metallschicht ist dabei mit Vorteil so gewählt, dass die semitransparente Metallschicht im sichtbaren Spektralbereich eine Transmission von 60% oder mehr, vorzugsweise eine Transmission zwischen 70% und 90% aufweist.

Anstelle der durchgehenden Metallschicht kann die semitransparente Metallschicht auch durch ein Raster aus opaken metallischen Rasterelementen beliebiger Form gebildet sein. Insbesondere kommen dabei Raster aus Linienrasterelementen oder Punktrasterelementen in Betracht. Die Größe und der Flächenanteil der opaken Rasterelemente sind mit Vorteil so gewählt, dass die semitransparente Metallschicht im sichtbaren Spektralbereich eine Transmission von 60% oder mehr, vorzugsweise eine Transmission zwischen 70% und 90% aufweist. Dabei spielt die Größe der Rasterelemente nur bei sehr kleinen Elementen und Abständen eine Rolle, bei hinreichend großen Rasterelementen und Elementabständen ist die Transmission der Metallschicht dagegen im Wesentlichen nur durch das Verhältnis der nichtmetallisierten Flächen zur Gesamtfläche des Rasters gegeben.

In beiden genannten Ausführungsformen umfasst die semitransparente Metallschicht zweckmäßig Aluminium, Silber, Chrom, Eisen, Kupfer, oder eine Kombination dieser Metalle. Andere Metalle können jedoch auch eingesetzt werden.

Die hochbrechende Schicht des erfindungsgemäßen Sicherheitselements ist bevorzugt aus einer Schicht gebildet, die einen Brechungsindex größer 1,9 aufweist. Hierbei kann es sich um eine Lackschicht oder ein dünne, aufgedampfte Schicht handeln. Bevorzugt wird eine hochbrechende Schicht aus ZnS oder TiO₂ verwendet. Die hochbrechende Schicht weist dabei zweckmäßig eine Schichtdicke zwischen 30 nm und 80 nm, vorzugsweise zwischen 40 nm und 70 nm auf. Zusätzliche Farbeffekte lassen sich mit dickeren hochbrechenden Schichten erzeugen. Im Rahmen der Erfindung weisen diese dickeren hochbrechenden Schichten eine Dicke zwischen 60 nm und 300 nm, vorzugsweise zwischen 70 nm und 250 nm auf.

Bei einer besonders vorteilhaften Ausgestaltung des erfindungsgemäßen Sicherheitselements ist die Beugungsstruktur durch eine Reliefstruktur gebildet.

Die semitransparente Metallschicht und/oder die hochbrechende Schicht können darüber hinaus Aussparungen in Form von Mustern, Zeichen oder Codierungen aufweisen. Im Bereich dieser Aussparungen ist der holographische Effekt dann nur schwach oder gar nicht erkennbar, so dass die Muster, Zeichen oder Codierungen mit den umgebenden Bereichen des Sicherheitselements kontrastieren.

Die Schichtenfolge kann neben der semitransparenten Metallschicht in einem Teilbereich zusätzlich eine opake Metallschicht aufweisen, welche vorzugsweise mit Aussparungen in Form von Mustern, Zeichen oder Codierungen versehen ist.

Gemäß einer Weiterbildung des erfindungsgemäßen Sicherheitselements ist die Schichtenfolge mit einem oder mehreren weiteren Sicherheitsmerkmalen, insbesondere mit lumineszierenden, magnetischen, elektrischen oder optisch variablen Stoffen versehen. Auch flüssigkristalline Schichten beliebiger Art können im Schichtaufbau des Sicherheitselements vorgesehen werden. Die mit den Beugungsstrukturen versehene Schicht des Sicherheitselements kann auch Bereiche mit Mattstrukturen aufweisen, die beispielsweise ebenfalls in Form einer Reliefstruktur erzeugt werden. Wird für die Erzeugung der Beugungsstrukturen ein Elektronenstrahl verwendet, so kann die Mattstruktur auf einfache Weise gleichzeitig mit der Beugungsstruktur erzeugt werden, wie beispielsweise in der DE 10 2004 003 984 A1 beschrieben.

Vorzugsweise ist die Schichtenfolge auf einem Substrat, insbesondere einem Foliensubstrat aufgebracht, das die Beugungsstruktur enthält. Alternativ ist die Schichtenfolge auf einem beschichteten Substrat, insbesondere einem beschichteten Foliensubstrat aufgebracht, wobei in diesem Fall die Beschichtung des Substrats die Beugungsstruktur enthält. Das beschichtete oder unbeschichtete Substrat stellt zweckmäßig eine Transferfolie oder eine Trägerfolie für das Sicherheitselement dar.

Das Sicherheitselement kann insbesondere ein Sicherheitsstreifen, ein Sicherheitsfaden, ein Etikett oder ein Transferelement zum Aufbringen auf ein Sicherheitspapier, Wertdokument und dergleichen sein.

Die Erfindung umfasst auch ein Sicherheitspapier für die Herstellung von Sicherheitsdokumenten, wie Banknoten, Ausweiskarten oder dergleichen, das mit einem oben beschriebenen Sicherheitselement ausgestattet ist. Das Sicherheitspapier kann insbesondere wenigstens einen durchgehenden Fensterbereich oder ein Loch enthalten, das mit dem Sicherheitselement bedeckt ist. Die Erfindung enthält ferner ein mit einem oben beschriebenen Sicherheitselement ausgestattetes Wertdokument, beispielsweise eine Banknote. Das Wertdokument kann ebenfalls einen mit dem Sicherheitselement bedeckten Fensterbereich oder ein damit abgedecktes Loch enthalten.

Das Sicherheitspapier oder das Wertdokument können weiter einen von dem Sicherheitselement zumindest teilweise überdeckten und durch das Sicherheitselement hindurch erkennbaren Aufdruck aufweisen. Der Informationsgehalt dieses Aufdrucks kann mit dem Informationsgehalt von in das Sicherheitselement eingebrachten Aussparungen und/oder einem in der Beugungsstruktur codierten Informationsgehalt in Beziehung stehen. Beispielsweise kann die Seriennummer oder eine andere individualisierte Kennzeichnung des Wertdokuments sich sowohl in dem überdeckten Aufdruck, als auch in dem Hologramm und/oder einer Negativschrift in einem opaken Teilbereich des Sicherheitselements finden.

Bei der Herstellung eines Sicherheitselements der beschriebenen Art wird in einer ersten Erfindungsvariante zunächst eine flächige Beugungsstruktur in ein Substrat, wie ein Foliensubstrat, eingeprägt, und das geprägte Substrat mit der Schichtenfolge kombiniert. Alternativ wird das Substrat, etwa ein Foliensubstrat, zunächst mit einer Beschichtung versehen, die entweder bereits eine flächige Beugungsstruktur aufweist, oder in die nach dem Aufbringen auf das Substrat eine flächige Beugungsstruktur eingeprägt wird. Dann wird das mit der geprägten Beschichtung versehene Substrat mit der Schichtenfolge kombiniert. Bei dieser Beschichtung handelt es sich vorzugsweise um einen Lack, wie einen UV-härtbaren Lack.

Der Lack oder das Foliensubstrat können eingefärbt werden, wobei die Farbe die optische Dichte von 1 nicht übersteigen darf, da ansonsten die beugungsoptischen Informationen zu schwach erkennbar sind. Andererseits wird der optische Eindruck des Sicherheitselements durch die Einfärbung gestalterisch aufgewertet.

Bei einer weiteren Erfindungsvariante wird das Substrat, etwa ein Foliensubstrat, zunächst mit der Schichtenfolge kombiniert und erst danach wird eine Beugungsstruktur in die kombinierte Schichtenfolge eingeprägt.

Auf das beschichtete oder unbeschichtete Substrat kann zunächst die hochbrechende Schicht und danach die semitransparente Metallschicht aufgebracht werden. Bevorzugt ist allerdings, zunächst die semitransparente Metallschicht und danach die hochbrechende Schicht auf die semitransparente Metallschicht aufzubringen. Sowohl die semitransparente Metallschicht als auch die hochbrechende Schicht werden vorzugsweise mit einem Vakuumdampfverfahren aufgebracht.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem aufgeklebten Sicherheitsstreifen nach einem Ausführungsbeispiel der Erfindung,
- Fig. 2: einen Querschnitt durch die Banknote von Fig. 1 im Bereich des Sicherheitsstreifens entlang der Linie II-II, und
- Fig. 3 und 4: Schnittdarstellungen von Sicherheitselementen nach weiteren Ausführungsbeispielen der Erfindung.

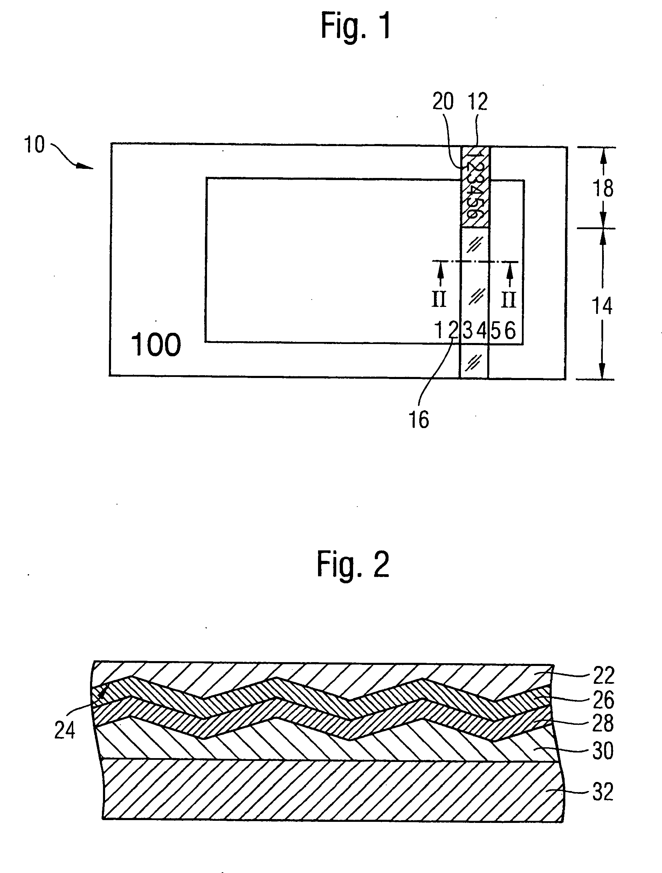

Die Erfindung wird nun am Beispiel einer Banknote erläutert. Fig.1 zeigt eine schematische Darstellung einer Banknote 10, die mit einem aufgeklebten Sicherheitsstreifen 12 versehen ist. In einem ersten Teilbereich 14 enthält der Sicherheitsstreifen 12 ein transparentes Hologramm, das, wie nachfolgend im Detail erläutert, eine hohe Lichtreflexion in bestimmte Richtungen mit einer hohen optischen Transparenz vereint.

Im Ausführungsbeispiel überdeckt der erste Teilbereich 14 einen Teil eines Untergrunddrucks 16 der Banknote, beispielsweise einen Teil einer Seriennummer. Aufgrund der hohen Transparenz des Sicherheitsstreifens 12 in diesem Teilbereich kann die Seriennummer auch in dem überdeckten Bereich problemlos erkannt und gelesen werden.

In einem zweiten Teilbereich 18 enthält der Sicherheitsstreifen 12 ein opakes Hologramm, in das informationshaltige Aussparungen 20 in Form einer Negativschrift eingebracht sind. Im Ausführungsbeispiel stellt die Negativschrift 20 ebenfalls die Seriennummer der Banknote dar, so dass durch Prüfung der Übereinstimmung der auf der Banknote aufgedruckten Information 16 mit der als Negativschrift in den Sicherheitsstreifen eingebrachten Information 20 die Echtheit der Banknote geprüft werden kann.

Alternativ oder zusätzlich kann auch der Informationsgehalt des Hologramms des Sicherheitsstreifens 20 typenspezifisch oder einzeln individualisiert sein, also beispielsweise die Denomination der Banknote und/ oder ihre Seriennummer enthalten.

Um den Aufbau des Sicherheitsstreifens 12 näher zu erläutern, zeigt die Fig. 2 eine schematische Schnittdarstellung der Banknote 10 entlang der Linie II-II im ersten Teilbereich 14 des Sicherheitsstreifens. Der Sicherheitsstreifen 12 weist eine Prägelackschicht 22 auf, in die eine Reliefstruktur 24 eingeprägt ist, welche in Reflexion ein Hologramm, ein hologrammartiges Beugungsbild, ein reines Gitterbild oder Kombinationen hiervon erzeugt. Die Prägelackschicht 22 ist mit einer dünnen semitransparenten Metallschicht 26 beschichtet, im Ausführungsbeispiel mit einer aufgedampften Aluminiumschicht. Die Dicke der Metallschicht 26 ist dabei so gewählt, dass ihre Transmission im sichtbaren Spektralbereich etwa 80% beträgt. Auf die semitransparente Metallschicht 26 ist weiter eine etwa 55 nm dicke, hochbrechende Beschichtung 28 aus ZnS aufgedampft.

Die Prägelackschicht 22 ist zusammen mit der Schichtenfolge aus semitransparenter Metallschicht 26 und hochbrechender Schicht 28 über eine Klebeschicht 30 auf dem bedruckten Banknotensubstrat 32 aufgebracht.

Insgesamt ist bei dem erfindungsgemäßen Sicherheitsstreifen die Reliefstruktur 24 mit einer Schichtenfolge aus zwei verschiedenartigen Teilschichten kombiniert, wodurch die Vorteile der beiden einzelnen Beschichtungen miteinander verbunden werden. Durch die hochbrechende Schicht 28 werden die geprägten Beugungsstrukturen 24 deutlich zum Vorschein gebracht, während die semitransparente Metallschicht 26 einerseits den Banknotenuntergrund abdunkelt und dadurch die beugungsoptische Wirksamkeit weiter erhöht und andererseits die Reflexionswirkung der hochbrechenden Beschichtung verstärkt. Dadurch wird die Erkennbarkeit der Beugungsstruktur auf einer hellen, diffus streuenden Unterlage, wie dem Banknotensubstrat 32, signifikant verbessert. Aufgrund der geringen Dicke der Metallschicht 26 ist das Hologramm trotz der hohen Lichtstärke in Reflexion zugleich hochtransparent, so dass der Untergrunddruck 16 auf dem Banknotensubstrat 32 gut lesbar ist.

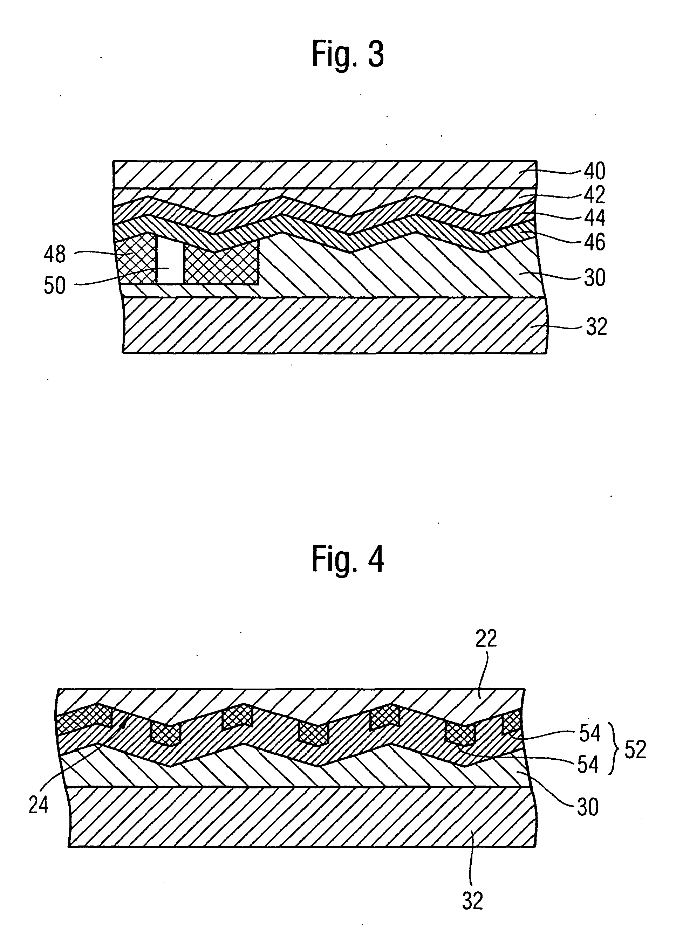

Fig. 3 zeigt eine alternative Gestaltung eines Sicherheitselements nach der Erfindung. Bei diesem Ausführungsbeispiel ist ein Foliensubstrat 40 mit einer Beschichtung 42 versehen, in der die Beugungsstrukturen vorliegen. Auf dieses beschichtete Substrat 40, 42 ist zunächst eine etwa 40 nm dicke hochbrechende TiO₂- Schicht 44 aufgedampft und auf diese eine semitransparente Kupferschicht 46 mit einer optischen Transmission von etwa 90% aufgebracht. In einem Teilbereich ist eine optisch dichte Metallschicht 48 auf die dünne Metallschicht 46 aufgebracht, welche mit Aussparungen 50 in Form von Mustern, Zeichen, oder Codierungen versehen ist. Auch hier ist das beschichtete Substrat 40, 42 zusammen mit der Schichtenfolge 44, 46 und 48 über eine Klebeschicht 30 auf dem Banknotensubstrat 32 aufgebracht.

Ein weiteres Ausführungsbeispiel der Erfindung ist in Fig. 4 dargestellt. Dabei ist, wie in Zusammenhang mit Fig. 2 beschrieben, einer Prägelackschicht 22 ein Beugungsmuster 24 eingeprägt. Anders als bei Fig. 2 wird auf die Prägelackschicht 22 jedoch keine durchgehende Metallschicht aufgebracht, sondern ein Raster 52 aus einer dickeren opaken Metallschicht. Die einzelnen Rasterelemente 54 können linien- oder punktförmig ausgebildet sein.

Die Transmission des Metallrasters 52 im sichtbaren Spektralbereich ergibt sich aus der Größe der Rasterelemente und insbesondere aus dem mit Metall belegten Flächenanteil. Bei dieser Erfindungsvariante lassen sich semitransparente und opake Hologrammbereiche in einem einzigen Beschichtungsschritt aufbringen, indem die dicke Metallschicht in den ersteren Bereichen gerastert, in letzteren Bereichen vollflächig aufgebracht wird.

Durch die Verwendung dickerer hochbrechender Schichten, mit Schichtdikken von etwa 70 nm bis etwa 250 nm, können durch gezielten Einsatz von Interferenzeffekten zusätzliche Farbwirkungen in dem Sicherheitsstreifen erzeugt werden.

## Patentansprüche

1. Sicherheitselement für Sicherheitspapiere, Wertdokumente und dergleichen mit einer flächigen Beugungsstruktur, **dadurch gekennzeichnet, dass** die flächige Beugungsstruktur mit einer aus zwei Schichten bestehenden Schichtenfolge aus einer semitransparenten, Metallschicht und einer hochbrechenden Schicht versehen ist.

2. Sicherheitselement nach Anspruch 1, **dadurch gekennzeichnet, dass** die semitransparente Metallschicht durch eine durchgehende dünne Metallschicht gebildet ist.

3. Sicherheitselement nach Anspruch 2, **dadurch gekennzeichnet, dass** die Dicke der durchgehenden Metallschicht so gewählt ist, dass sie im sichtbaren Spektralbereich eine Transmission von 60% oder mehr, vorzugsweise eine Transmission zwischen 70% und 90% aufweist.

4. Sicherheitselement nach Anspruch 1, **dadurch gekennzeichnet, dass** die semitransparente Metallschicht **durch** ein Raster aus opaken metallischen Rasterelementen gebildet ist.

5. Sicherheitselement nach Anspruch 4, **dadurch gekennzeichnet, dass** das Raster aus Linienrasterelementen und/ oder Punktrasterelementen gebildet ist.

6. Sicherheitselement nach Anspruch 4 oder 5, **dadurch gekennzeichnet, dass** die Größe und der Flächenanteil der opaken Rasterelemente so gewählt ist, dass das Raster im sichtbaren Spektralbereich eine Transmission von 60% oder mehr, vorzugsweise eine Transmission zwischen 70% und 90% aufweist.

7. Sicherheitselement nach wenigstens einem der Ansprüche 2 bis 6, **dadurch gekennzeichnet, dass** die semitransparente Metallschicht Aluminium, Chrom, Eisen, Kupfer; oder eine Kombination dieser Metalle umfasst.

8. Sicherheitselement nach wenigstens einem der Ansprüche 1 bis 7, **dadurch gekennzeichnet, dass** die hochbrechende Schicht aus ZnS oder TiO₂ gebildet ist.

9. Sicherheitselement nach wenigstens einem der Ansprüche 1 bis 8, **dadurch gekennzeichnet, dass** die hochbrechende Schicht eine Schichtdicke zwischen 30 nm und 80 nm, vorzugsweise zwischen 40 nm und 70 nm aufweist.

10. Sicherheitselement nach wenigstens einem der Ansprüche 1 bis 8, **dadurch gekennzeichnet, dass** die hochbrechende Schicht zur Erzielung zusätzlicher Farbeffekte eine Schichtdicke zwischen 60 mm und 300 nm, vorzugsweise zwischen 70 nm und 250 nm aufweist.

11. Sicherheitselement nach wenigstens einem der Ansprüche 1 bis 10, **dadurch gekennzeichnet, dass** die semitransparente Metallschicht und/oder die hochbrechende Schicht Aussparungen in Form von Mustern, Zeichen oder Codierungen aufweist.

12. Sicherheitselement nach wenigstens einem der Ansprüche 1 bis 11, **dadurch gekennzeichnet, dass** die Beugungsstruktur durch eine Reliefstruktur gebildet ist.

13. Sicherheitselement nach wenigstens einem der Ansprüche 1 bis 12, **dadurch gekennzeichnet, dass** die Schichtenfolge mit Mattstrukturen in Form einer Reliefstruktur kombiniert ist.

14. Sicherheitselement nach Wenigstens einem der Ansprüche 1 bis 13, **dadurch gekennzeichnet, dass** die Schichtenfolge in einem Teilbereich mit einer opaken Metallschicht kombiniert ist, die vorzugsweise mit Aussparungen in Form von Mustern, Zeichen oder Codierungen versehen ist.

15. Sicherheitselement nach wenigstens einem der Ansprüche 1 bis 14, **dadurch gekennzeichnet, dass** die Schichtenfolge mit einem oder mehreren weiteren Sicherheitsmerkmalen, insbesondere mit lumineszierenden, magnetischen, elektrischen oder optisch variablen Stoffen kombiniert ist.

16. Sicherheitselement nach wenigstens einem der Ansprüche 1 bis 15, **dadurch gekennzeichnet, dass** die Schichtenfolge auf einem Substrat, insbesondere einem Foliensubstrat aufgebracht ist, das die flächige Beugungsstruktur enthält.

17. Sicherheitselement nach wenigstens einem der Ansprüche 1 bis 16, **dadurch gekennzeichnet, dass** die Schichtenfolge auf einem beschichteten Substrat, insbesondere einem beschichteten Foliensubstrat aufgebracht ist, wobei die Beschichtung des Substrats die flächige Beugungsstruktur enthält.

18. Sicherheitselement nach einem der Ansprüche 16 oder 17, **dadurch gekennzeichnet, dass** das beschichtete oder unbeschichtete Substrat eine Transferfolie oder Trägerfolie für das Sicherheitselement darstellt.

19. Sicherheitselement nach wenigstens einem der Ansprüche 1 bis 18, **dadurch gekennzeichnet, dass** das Sicherheitselement ein Sicherheitsstreifen, ein Sicherheitsfaden, ein Etikett oder ein Transferelement zum Aufbringen auf ein Sicherheitspapier, Wertdokument oder dergleichen ist.

20. Sicherheitspapier für die Herstellung von Sicherheitsdokumenten, wie Banknoten, Ausweiskarten oder dergleichen, das mit einem Sicherheitselement nach wenigstens einem der Ansprüche 1 bis 19 ausgestattet ist.

21. Sicherheitspapier nach Anspruch 20 mit wenigstens einem mit dem Sicherheitselement bedeckten Fensterbereich oder Loch.

22. Sicherheitspapier nach einem der Ansprüche 20 oder 21, mit einem von dem Sicherheitselement zumindest teilweise überdeckten und durch das Sicherheitselement hindurch erkennbaren Aufdruck.

23. Wertdokument, wie Banknote, Scheck, Urkunde, Ausweiskarte oder dergleichen, das mit einem Sicherheitselement nach wenigstens einem der Ansprüche 1 bis 19 ausgestattet ist.

24. Wertdokument nach Anspruch 23, mit wenigstens einem mit dem Sicherheitselement bedeckten Fensterbereich oder Loch.

25. Wertdokument nach Anspruch 23 oder 24, mit einem von dem Sicherheitselement zumindest teilweise überdeckten und durch das Sicherheitselement hindurch erkennbaren Aufdruck.

26. Verwendung eines Sicherheitselements nach wenigstens einem der Ansprüche 1 bis 19, eines Sicherheitspapiers nach einem der Ansprüche 20 bis 22, oder eines Wertdokuments nach einem der Ansprüche 23 bis 25 zur Sicherung von Waren beliebiger Art.

27. Verfahren zur Herstellung eines Sicherheitselements nach wenigstens einem der Ansprüche 1 bis 19, bei dem eine flächige Beugungsstruktur mit einer aus zwei Schichten bestehenden Schichtenfolge versehen wird, wobei die Schichtenfolge aus einer semitransparenten Metallschicht und einer hochbrechenden Schicht besteht.

28. Verfahren nach Anspruch 27, **dadurch gekennzeichnet, dass** in ein Substrat, insbesondere ein Foliensubstrat, eine flächige Beugungsstruktur eingeprägt wird, und das geprägte Substrat mit der Schichtenfolge kombiniert wird.

29. Verfahren nach Anspruch 28, **dadurch gekennzeichnet, dass** ein Substrat, insbesondere ein Foliensubstrat, mit einer Beschichtung versehen wird, in die eine flächige Beugungsstruktur eingeprägt ist oder wird, und dass das mit der geprägten Beschichtung versehene Substrat mit der Schichtenfolge kombiniert wird.

30. Verfahren nach Anspruch 27, **dadurch gekennzeichnet, dass** ein Substrat, insbesondere ein Foliensubstrat, mit der Schichtenfolge kombiniert wird und nachfolgend eine flächige Beugungsstruktur in die kombinierte Schichtenfolge eingeprägt wird.

31. Verfahren nach wenigstens einem der Ansprüche 27 bis 30, **dadurch gekennzeichnet, dass** auf das beschichtete oder unbeschichtete Substrat zunächst die semitransparente Metallschicht und dann die hochbrechende Schicht aufgebracht wird.

32. Verfahren nach wenigstens einem der Ansprüche 27 bis 31, **dadurch gekennzeichnet, dass** die semitransparente Metallschicht und/oder die hochbrechende Schicht mit einem Vakuumdampfverfahren aufgedampft werden.

## Claims

1. A security element for security papers, value documents and the like having an areal diffraction pattern, **characterized in that** the areal diffraction pattern is provided with a layer sequence consisting of two layers composed of a semitransparent metal layer and a high-index layer.

2. The security element according to claim 1, **characterized in that** the semitransparent metal layer is formed by a through thin metal layer.

3. The security element according to claim 2, **characterized in that** the thickness of the through metal layer is chosen such that, in the visible spectral range, it exhibits a transmission of 60% or more, preferably a transmission between 70% and 90%.

4. The security element according to claim 1, **characterized in that** the semitransparent metal layer is formed by a grid composed of opaque metallic grid elements.

5. The security element according to claim 4, **characterized in that** the grid is formed from line grid elements and/ or dot grid elements.

6. The security element according to claim 4 or 5, **characterized in that** the size and the areal fraction of the opaque grid elements is chosen such that, in the visible spectral range, the grid exhibits a transmission of 60% or more, preferably a transmission between 70% and 90%.

7. The security element according to at least one of claims 2 to 6, **characterized in that** the semitransparent metal layer comprises aluminum, chrome, iron, copper, or a combination of these metals.

8. The security element according to at least one of claims 1 to 7, **characterized in that** the high-index layer is formed from ZnS or TiO₂.

9. The security element according to at least one of claims 1 to 8, **characterized in that** the high-index layer exhibits a layer thickness between 30 nm and 80 nm, preferably between 40 nm and 70 nm.

10. The security element according to at least one of claims 1 to 8, **characterized in that** the high-index layer exhibits a layer thickness between 60 nm and 300 nm, preferably between 70 nm and 250 nm, to achieve additional color effects.

11. The security element according to at least one of claims 1 to 10, **characterized in that** the semitransparent metal layer and/or the high-index layer exhibits gaps in the form of patterns, characters or codes.

12. The security element according to at least one of claims 1 to 11, **characterized in that** the diffraction pattern is formed by a relief pattern.

13. The security element according to at least one of claims 1 to 12, **characterized in that** the layer sequence is combined with matte patterns in the form of a relief pattern.

14. The security element according to at least one of claims 1 to 13, **characterized in that**, in a sub-region, the layer sequence is combined with an opaque metal layer that is preferably provided with gaps in the form of patterns, characters or codes.

15. The security element according to at least one of claims 1 to 14, **characterized in that** the layer sequence is combined with one or more further security features, especially with luminescent, magnetic, electrical or optically variable substances.

16. The security element according to at least one of claims 1 to 15, **characterized in that** the layer sequence is applied to a substrate, especially a foil substrate, that includes the areal diffraction pattern.

17. The security element according to at least one of claims 1 to 16, **characterized in that** the layer sequence is applied to a coated substrate, especially a coated foil substrate, the coating of the substrate including the areal diffraction pattern.

18. The security element according to one of claims 16 or 17, **characterized in that** the coated or uncoated substrate constitutes a transfer foil or support foil for the security element.

19. The security element according to at least one of claims 1 to 18, **characterized in that** the security element is a security strip, a security thread, a label or a transfer element for application to a security paper, value document or the like.

20. A security paper for manufacturing security documents, such as banknotes, identification cards or the like, that is furnished with a security element according to at least one of claims 1 to 19.

21. The security paper according to claim 20 having at least one window region or hole that is covered with the security element.

22. The security paper according to one of claims 20 or 21, having an imprint that is at least partially covered by the security element and that is perceptible through the security element.

23. A value document, such as a banknote, check, certificate, identification card or the like, that is furnished with a security element according to at least one of claims 1 to 19.

24. The value document according to claim 23, having at least one window region or hole that is covered with the security element.

25. The value document according to claim 23 or 24, having an imprint that is at least partially covered by the security element and that is perceptible through the security element.

26. A use of a security element according to at least one of claims 1 to 19, of a security paper according to one of claims 20 to 22, or of a value document according to one of claims 23 to 25 for securing goods of any kind.

27. A method for manufacturing a security element according to at least one of claims 1 to 19, in which an areal diffraction pattern is provided with a layer sequence consisting of two layers, the layer sequence consisting of a semitransparent metal layer and a high-index layer.

28. The method according to claim 27, **characterized in that** an areal diffraction pattern is embossed in a substrate, especially a foil substrate, and the embossed substrate is combined with the layer sequence.

29. The method according to claim 28, **characterized in that** a substrate, especially a foil substrate, is provided with a coating in which an areal diffraction pattern is or will be embossed, and **in that** the substrate that is provided with the embossed coating is combined with the layer sequence.

30. The method according to claim 27, **characterized in that** a substrate, especially a foil substrate, is combined with the layer sequence and, subsequently, an areal diffraction pattern is embossed in the combined layer sequence.

31. The method according to at least one of claims 27 to 30, **characterized in that** first the semitransparent metal layer and then the high-index layer is applied to the coated or uncoated substrate.

32. The method according to at least one of claims 27 to 31, **characterized in that** the semitransparent metal layer and/ or the high-index layer are vapor deposited with a vacuum vapor deposition process.

## Revendications

1. Elément de sécurité pour papiers de sécurité, documents de valeur et analogues, comportant une structure de diffraction bidimensionnelle, **caractérisé en ce que** la structure de diffraction bidimensionnelle est pourvue d'une séquence de couches constituée de deux couches, à savoir une couche métallique semi-transparente et une couche à haut indice de réfraction.

2. Elément de sécurité selon la revendication 1, **caractérisé en ce que** la couche métallique semi-transparente est formée d'une couche métallique mince continue.

3. Elément de sécurité selon la revendication 2, **caractérisé en ce que** l'épaisseur de la couche métallique continue est choisie de façon à présenter dans le domaine spectral visible un facteur de transmission de 60 % ou plus, de préférence un facteur de transmission compris entre 70 et 90 %.

4. Elément de sécurité selon la revendication 1, **caractérisé en ce que** la couche métallique semi-transparente est formée d'une trame constituée d'éléments de trame métalliques opaques.

5. Elément de sécurité selon la revendication 4, **caractérisé en ce que** la trame est formée d'éléments de trame linéaire et/ou d'éléments de trame de points.

6. Elément de sécurité selon la revendication 4 ou 5, **caractérisé en ce que** la taille et l'aire en pourcentage des éléments de trame opaques sont choisies de telle sorte que la trame présente dans le domaine spectral visible un facteur de transmission de 60 % ou plus, de préférence un facteur de transmission compris entre 70 et 90 %.

7. Elément de sécurité selon au moins l'une des revendications 2 à 6, **caractérisé en ce que** la couche métallique semi-transparente comprend de l'aluminium, du chrome, du fer, du cuivre ou une combinaison de ces métaux.

8. Elément de sécurité selon au moins l'une des revendications 1 à 7, **caractérisé en ce que** la couche à haut indice de réfraction est formé de ZnS ou de TiO₂.

9. Elément de sécurité selon au moins l'une des revendications 1 à 8, **caractérisé en ce que** la couche à haut indice de réfraction présente une épaisseur de couche comprise entre 30 et 80 nm, de préférence entre 40 et 70 nm.

10. Elément de sécurité selon au moins l'une des revendications 1 à 8, **caractérisé en ce que** la couche à haut indice de réfraction présente, pour réaliser des effets chromatiques supplémentaires, une épaisseur de couche comprise entre 60 et 300 nm, de préférence entre 70 et 250 nm.

11. Elément de sécurité selon au moins l'une des revendications 1 à 10, **caractérisé en ce que** la couche métallique semi-transparente et/ou la couche à haut indice de réfraction comprennent des évidements sous forme de modèles, de caractères ou de codages.

12. Elément de sécurité selon au moins l'une des revendications 1 à 11, **caractérisé en ce que** la structure de diffraction est formée d'une structure en relief.

13. Elément de sécurité selon au moins l'une des revendications 1 à 12, **caractérisé en ce que** la séquence des couches est combinée à des structures mates sous forme d'une structure en relief.

14. Elément de sécurité selon au moins l'une des revendications 1 à 13, **caractérisé en ce que** la séquence de couches est, dans une zone partielle, combinée à une couche métallique opaque, qui de préférence est pourvue d'évidements sous forme de modèles, de caractères ou de codages.

15. Elément de sécurité selon au moins l'une des revendications 1 à 14, **caractérisé en ce que** la séquence de couches est combinée à une ou plusieurs caractéristiques de sécurité supplémentaires, en particulier à des substances luminescentes, magnétiques, électriques ou optiquement variables.

16. Elément de sécurité selon au moins l'une des revendications 1 à 15, **caractérisé en ce que** la séquence de couches est appliquée sur un substrat, en particulier un substrat en feuille, qui contient la structure de diffraction bidimensionnelle.

17. Elément de sécurité selon au moins l'une des revendications 1 à 16, **caractérisé en ce que** la séquence de couches est appliquée sur un substrat enduit, en particulier un substrat enduit en feuille, l'enduction du substrat contenant la structure de diffraction bidimensionnelle.

18. Elément de sécurité selon l'une des revendications 16 ou 17, **caractérisé en ce que** le substrat enduit ou non enduit représente une feuille de transfert ou une feuille support pour l'élément de sécurité.

19. Elément de sécurité selon au moins l'une des revendications 1 à 18, **caractérisé en ce que** l'élément de sécurité est une bande de sécurité, un fil de sécurité, une étiquette ou un élément de transfert pour application sur un papier de sécurité, un document de valeur ou analogues.

20. Papier de sécurité pour la fabrication de documents de sécurité, tels que des billets de banque, des cartes d'identité ou analogues, qui est équipé d'un élément de sécurité selon au moins l'une des revendications 1 à 19.

21. Papier de sécurité selon la revendication 20, comportant au moins une zone de fenêtre ou un trou recouvert par l'élément de sécurité.

22. Papier de sécurité selon l'une des revendications 20 ou 21, comportant une surimpression au moins partiellement recouverte par l'élément de sécurité, et pouvant être reconnue à travers l'élément de sécurité.

23. Document de valeur, tel qu'un billet de banque, un chèque, un certificat, une carte d'identité ou analogues, qui est équipé d'un élément de sécurité selon au moins l'une des revendications 1 à 19.

24. Document de valeur selon la revendication 23, comportant au moins une zone de fenêtre ou un trou recouvert par l'élément de sécurité.

25. Document de valeur selon la revendication 23 ou 24, comportant une surimpression au moins partiellement recouverte par l'élément de sécurité et pouvant être reconnue à travers l'élément de sécurité.

26. Utilisation d'un élément de sécurité selon au moins l'une des revendications 1 à 19, d'un papier de sécurité selon l'une des revendications 20 à 22 ou d'un document de valeur selon l'une des revendications 23 à 25 pour l'authentification de marchandises de toute nature.

27. Procédé de fabrication d'un élément de sécurité selon au moins l'une des revendications 1 à 19, dans lequel on pourvoit une structure de diffraction bidimensionnelle d'une séquence de couches constituée de deux couches, la séquence de couches étant constituée d'une couche métallique semi-transparente et d'une couche à haut indice de réfraction.

28. Procédé selon la revendication 27, **caractérisé en ce qu'**on empreint un substrat, en particulier un substrat en feuille, d'une structure de diffraction bidimensionnelle, et on combine le substrat empreint à la séquence de couches.

29. Procédé selon la revendication 28, **caractérisé en ce qu'**on empreint un substrat, en particulier un substrat en feuille, d'un revêtement dont une structure de diffraction bidimensionnelle est ou a déjà été empreinte, et **en ce que** le substrat pourvu du revêtement gaufré est combiné à la séquence de couches.

30. Procédé selon la revendication 27, **caractérisé en ce qu'**on combine un substrat, en particulier un substrat en feuille, à la séquence de couches, puis on empreint d'une structure de diffraction bidimensionnelle la séquence de couches combinée.

31. Procédé selon au moins l'une des revendications 27 à 30, **caractérisé en ce qu'**on applique sur le substrat enduit ou non enduit d'abord la couche métallique semi-transparente, puis la couche à haut indice de réfraction.

32. Procédé selon au moins l'une des revendications 27 à 31, **caractérisé en ce que** la couche métallique semi-transparente et/ou la couche à haut indice de réfraction sont appliquées par métallisation sous vide par un procédé sous vide en phase vapeur.
